# FASCICULE DE BREVET EUROPEEN

(11) **EP 0 955 784 B1**
(45) Date de publication et mention de la délivrance du brevet: **27.07.2005**
(21) Numéro de dépôt: 99401070.0
(22) Date de dépôt: 03.05.1999
(51) Int. Cl.: H04Q 7/38

(54) **Procédé de transfert d'une communication entre deux relais d'une même cellule dans un système de radio-communication numérique cellulaire utilisant un canal de trafic partagé intermédiaire.**
Verfahren zum Weiterreichen zwischen zwei Relays einer Zelle eines digitalen zellularen Funkkommunikationssystems mittels eines gemeinsamen Übergangskanals.
Method for intracell handoff between two relays of a cell in a digital cellular radio communication system by using an intermediate shared channel.

(30) Priorité: 04.05.1998 FR 9805611
(43) Date de publication de la demande: 10.11.1999
(73) Titulaire: ALCATEL, 75008 Paris (FR)
(72) Inventeur: Girardeau, Laurent, 95800 Cergy le Haut (FR); Cherpantier, Corinne, 92500 Rueil Malmaison (FR)
(74) Mandataire: El Manouni, Josiane

(56) Documents cités:
- EP-A- 0 479 255
- WO-A-98/18281

## Description

Le domaine de l'invention est celui des communications numériques dans des systèmes de radiocommunication. L'invention s'applique en particulier, mais non exclusivement, aux systèmes cellulaires selon le standard GSM 900 (pour "Groupe spécial Systèmes Mobiles publics de radiocommunication fonctionnant dans la bande des 900 MHz"), DCS 1800 ("Digital Cellular System 1800 MHz" en anglais) ou encore PCS (pour "Personal Communication System" en anglais).

Plus précisément, l'invention concerne le transfert de communication (ou "handover" en anglais) entre deux relais d'une cellule d'un système de radio-communication numérique cellulaire, encore appelé transfert de communication intracellulaire.

Classiquement, une cellule est associée à une station de base. Cette station de base met en oeuvre une porteuse de signalisation (BCCH) qui lui est propre et qui supporte notamment un canal de diffusion BCCH. Une station mobile, présente dans cette cellule, communique avec le système par l'intermédiaire de la station de base. Une telle communication est assurée via une porteuse de trafic qui lui est affectée par la station de base. L'information correspondant à cette affectation est transmise sur la porteuse de signalisation (BCCH).

De façon classique, chaque porteuse est partagée de manière temporelle, en utilisant un schéma de multiplexage à répartition dans le temps (AMRT). Selon ce schéma, l'axe temporel est divisé en trames successives de durée prédéterminée. Chacune des trames est elle-même divisée en un nombre déterminé d'intervalles de temps. La récurrence d'un intervalle de temps particulier dans chaque trame correspond à un canal physique sur lequel peuvent être multiplexés plusieurs canaux logiques.

On rappelle qu'une station mobile communique via un canal de trafic (TCH) (distinct de ceux affectés aux autres stations mobiles situées dans la même cellule) et reçoit des informations concernant le système via au moins un canal de signalisation associé à ce canal de trafic.

L'invention s'applique aux cellules dans lesquelles la station de base met en oeuvre plusieurs relais distribués géographiquement au sein de la cellule. Chacun des relais comprend une antenne. A chaque antenne est associée au moins un dispositif d'émission/réception (ou "TRX" selon la terminologie GSM). Chaque dispositif d'émission/réception comporte un émetteur d'une porteuse de trafic de voie descendante, et un récepteur d'une porteuse de trafic de voie montante.

Les relais et donc les antennes, sont répartis géographiquement à l'intérieur de la cellule associée, de façon à permettre une meilleure couverture et/ou à assurer une plus grande densité d'appel. Les différents relais restent associés à une porteuse de signalisation BCCH commune. Pour cela, au moins certains de ces relais comprennent un émetteur de la porteuse de signalisation de voie descendante et un récepteur de la porteuse de signalisation de voie montante.

L'ensemble des relais peut être relié au niveau hiérarchique supérieur (un contrôleur de station de base (ou BSC pour "Base Station Controler") dans le contexte GSM) via un centre de concentration. Selon une variante, c'est le BSC qui assure directement les fonctions de concentration, et les relais sont dans ce cas directement reliés au BSC.

Le problème qui se pose ici est celui du transfert de communication entre deux relais de la cellule. EP 0 479 255 décrit telle cellule avec station de base distribuée.

On rappelle qu'il existe un procédé de transfert de communication "classique", qui intervient entre les stations de base de deux cellules distinctes. Ce procédé "classique" est maintenant résumé. Classiquement, chaque station de base émet une porteuse de signalisation BCCH qui lui est propre. La station mobile mesure en permanence les porteuses de signalisation BCCH des cellules avoisinantes. Les résultats de ces mesures sont transmis régulièrement, via la station de base courante, à un contrôleur de station de base qui décide de l'opportunité d'effectuer un transfert de communication. Lorsqu'un transfert de communication doit être effectué, le contrôleur décide quelle est la station de base cible et y affecte un canal de trafic cible à la station mobile. Cette affectation est transmise à la station mobile, de façon que celle-ci effectue le basculement demandé entre le canal de trafic courant et le canal de trafic cible.

Il a été envisagé, par simple substitution de la notion de station de base par celle de relais, de transposer ce transfert de communication "classique" entre stations de base au cas d'un transfert de communication (qui n'est plus "classique") entre relais d'une même station de base.

Malheureusement, une telle transposition n'est pas aisée, voire impossible. En d'autres termes, le procédé "classique" de transfert de communication ne peut pas aisément être mis en oeuvre avec la configuration de station de base distribuée (c'est-à-dire comprenant une pluralité de relais) à laquelle s'applique la présente invention.

En effet, chacun des relais n'émet pas un signal qui lui est propre (et donc qui permettrait de l'identifier). En conséquence, la station mobile n'est pas en mesure de communiquer au système des mesures permettant à ce dernier de décider de l'opportunité d'un transfert de communication, ni a fortiori du meilleur relais cible vers lequel effectuer un tel transfert.

L'invention a notamment pour objectif de pallier cet inconvénient majeur de l'état de la technique.

Plus précisément, l'un des objectifs de la présente invention est de fournir un procédé de transfert de communication entre deux relais d'une même cellule d'un système de radio-communication, qui soit simple à mettre en oeuvre et peu coûteux.

Un autre objectif de l'invention est de fournir un tel procédé permettant d'optimiser l'utilisation des ressources utiles.

Un objectif complémentaire est de fournir un tel procédé ne nécessitant aucun développement matériel supplémentaire, ni dans les stations mobiles, ni dans le système.

Un objectif supplémentaire est de fournir un tel procédé permettant de limiter le nombre de transferts de communication entre relais nécessaires pour l'obtention d'un niveau de qualité de réception prédéterminé.

Ces différents objectifs, ainsi que d'autres qui apparaîtront par la suite, sont atteints selon l'invention, à l'aide d'un procédé de transfert d'une communication entre deux relais, dits relais courant et relais cible, au sein d'une même cellule d'un système de radiocommunication numérique cellulaire, ladite cellule étant associée à une station de base comprenant une pluralité de relais, dont lesdits relais courant et cible, distribués géographiquement au sein de ladite cellule, chaque relais comprenant au moins une antenne reliée à au moins un dispositif d'émission/réception, chaque relais disposant d'une pluralité de canaux de trafic et d'une pluralité de canaux de signalisation associés, ladite communication étant établie pour une station mobile et se voyant affecter, parmi les canaux du relais courant, au moins un canal de trafic courant et au moins un canal de signalisation associé courant,
caractérisé en ce que ladite pluralité de relais partage au moins un canal de trafic particulier, dit canal de trafic partagé, qui est réservé au moins partiellement au transfert de communication,
et en ce que ledit procédé comprend les étapes successives suivantes :
- une première phase de transfert de communication, avec comme premier canal de trafic cible ledit canal de trafic partagé ;
   ladite première phase comprenant elle-même les étapes successives suivantes :
   * l'émission par ladite station mobile d'au moins un message de test vers ladite pluralité de relais, via ledit canal de trafic partagé ;
   * la sélection par ledit système dudit relais cible parmi ladite pluralité de relais, en fonction d'au moins un critère de sélection prédéterminé basé sur au moins un paramètre lié à la qualité de réception dudit au moins un message de test ;
- une seconde phase de transfert de communication, avec comme second canal de trafic cible un canal de trafic associé audit relais cible.

Le principe général de l'invention repose donc sur l'introduction, lors du transfert de communication d'un relais courant vers un relais cible, d'un canal de trafic partagé intermédiaire dont l'utilisation vient s'intercaler dans le temps entre celle du canal de trafic courant et celle du canal de trafic cible. En d'autres termes, le procédé de l'invention s'assimile à un mécanisme de double transfert de communication revenant à effectuer successivement :
- un premier transfert de communication, du canal de trafic courant vers le canal de trafic partagé ;
- un deuxième transfert de communication, du canal de trafic partagé vers le canal de trafic cible.

Il est intéressant de noter que la station mobile peut transmettre, via le canal de trafic partagé, en tant que message(s) de test, outre un message spécifique tel que le message "Handover-Access" dans la norme GSM, également un ou une pluralité de message(s) de trafic vers les différents relais de la cellule.

On notera qu'aucun développement matériel supplémentaire n'est à prévoir, tant au niveau des stations mobiles que de l'équipement propre au système.

Ainsi, selon le procédé de l'invention, on sélectionne le relais cible qui reçoit le mieux la station mobile. On rappelle qu'au contraire, dans le procédé "classique" précité, on sélectionne la station de base qui est la mieux reçue par la station mobile. Le fait que ce soient les relais (et non plus la station mobile) qui effectuent les mesures, et ce grâce au canal de trafic partagé, permet de s'affranchir de l'absence d'émission par chacun des relais d'un signal spécifique (et donc de l'impossibilité de sélectionner le relais cible par une simple écoute des signaux émis par les différents relais).

Il est clair que, dans le relais courant, le canal de trafic courant et le canal de trafic partagé peuvent être supportés soit par une même porteuse, soit par deux porteuses distinctes. On rappelle que chaque dispositif d'émission/réception courant est associé à une porteuse distincte.

De même, dans le relais cible, le canal de trafic cible et le canal de trafic partagé peuvent être supportés soit par une même porteuse soit par deux porteuses distinctes.

Il est à noter que, dans certains cas, le relais cible n'est autre que le relais courant (par exemple si le relais courant est le "moins mauvais" en terme de qualité de réception). Dans ce cas, le transfert de communication entre relais n'est pas effectué.

De façon avantageuse, ladite première phase de transfert de communication est précédée de l'étape suivante :
- ledit système et/ou ladite station mobile détecte(nt), selon un critère de détection prédéterminé, une dégradation de la qualité de ladite communication..

L'invention n'impose aucune contrainte quant au critère de détection utilisé. Il s'agit par exemple d'un passage au-dessous d'un seuil prédéterminé de la puissance de réception.

Préférentiellement, ledit système de radiocommunication numérique cellulaire est du type à accès multiple à répartition dans le temps.

Il est clair cependant que le principe de l'invention, basé sur l'introduction d'un canal de trafic partagé, peut s'appliquer à d'autres types de système de radiocommunication, tels que notamment (mais non exclusivement) ceux du type à Accès multiple à Répartition Fréquentielle (ou FDMA), ou à Accès multiple à Répartition par Code (ou CDMA).

De façon préférentielle, tous les relais de ladite cellule sont synchrones en trames, et en ce que ledit canal de trafic partagé est défini avec des caractéristiques identiques dans l'ensemble desdits relais.

En d'autres termes, les ressources correspondant à un canal partagé sont utilisées et définies de façon identique par tous les relais.

Avantageusement, la réservation au transfert de communication dudit canal de trafic partagé est du type appartenant au groupe comprenant :
- la réservation stricte ;
- la réservation partielle, par mise en oeuvre d'une stratégie prédéterminée de gestion de priorité.

Dans le cas de la réservation stricte, (c'est-à-dire à la seule fin du transfert de communication), il est avantageux que chaque relais comprenne au moins deux dispositifs d'émission/réception, de façon à augmenter le nombre de canaux de trafic disponibles et donc à limiter le handicap que constitue la réservation stricte de ces canaux de trafic.

Par réservation partielle d'un canal partagé, on entend le fait que ce canal partagé est aussi parfois utilisé comme canal "normal" (c'est-à-dire non partagé et par exemple dédié à une station mobile donnée). La gestion de priorité d'utilisation d'un tel canal partagé consiste par exemple à prévoir un niveau de priorité plus important pour l'utilisation en tant que canal de transfert de communication que l'utilisation en tant que canal "normal" (de trafic ou de signalisation).

Préférentiellement, ledit transfert de communication est du type asynchrone ou synchrone.

Dans le cas du transfert de communication de type asynchrone, la station mobile a besoin de l'information d'avance temporelle (ou "Timing Advance" selon la terminologie GSM), pour pouvoir se synchroniser et communiquer avec le relais cible. Cette information d'avance temporelle est transmise à la station mobile avec le message de réponse (PHYSICAL-INFO).

Dans le cas du transfert de communication de type synchrone, les horloges des différents relais sont, par hypothèse, synchrones. Ainsi, lorsqu'une station mobile passe d'un relais à un autre, il n'est pas nécessaire de lui fournir une nouvelle information d'avance temporelle, puisque celle-ci est immédiatement déduite de celle utilisée auparavant.

De façon avantageuse, ladite première phase de transfert de communication est suivie de l'étape suivante :
- ledit système envoie audit relais courant un message de libération dudit au moins un canal de trafic courant.

On optimise ainsi la réutilisation des canaux du relais courant.

Avantageusement, ladite seconde phase de transfert de communication est suivie de l'étape suivante :
- ledit système envoie à ladite pluralité de relais un message de libération dudit au moins un canal de trafic partagé.

De cette manière, dans le cadre d'une réservation stricte, on laisse le canal de trafic partagé disponible à d'autres stations mobiles pour effectuer leur propre transfert de communication. Dans le cadre d'une réservation partielle, on laisse le canal de trafic partagé libre pour qu'une autre station mobile ou éventuellement la même station mobile l'utilise en tant que canal "normal" de trafic.

Préférentiellement, ledit au moins un paramètre, lié à la qualité de réception dudit au moins un message de test et sur lequel est basé ledit critère de sélection prédéterminé, appartient au groupe comprenant :
- la puissance de réception ;
- le rapport signal à bruit ;
- le taux d'erreur brut ;
- le taux d'erreur après décodage.

Il est clair que cette liste n'est pas limitative. En outre, la sélection peut être effectuée en fonction de plusieurs de ces paramètres. Enfin, on peut également envisager de combiner plusieurs paramètres en pondérant chacun d'eux par un coefficient de pondération (qui peut lui-même être prédéterminé en fonction d'un autre paramètre).

Avantageusement, ladite cellule correspond à une couverture en intérieur et/ou en extérieur.

La couverture en intérieur (ou "indoor" en anglais) correspond par exemple à celle d'un bâtiment. La couverture en extérieur (ou "outdoor" en anglais) correspond par exemple à une zone prédéterminée autour de ce bâtiment.

D'autres caractéristiques et avantages de l'invention apparaîtront à la lecture de la description suivante d'un mode de réalisation préférentiel de l'invention, donné à titre de simple exemple indicatif et non limitatif, et des dessins annexés, dans lesquels :
- la figure 1 illustre un schéma simplifié d'un mode de réalisation particulier d'un système dans lequel peut être mis en oeuvre le procédé selon l'invention de transfert de communication ;
- la figure 2 présente un organigramme simplifié d'un mode de réalisation particulier du procédé de transfert de communication selon l'invention ;
- la figure 3 présente un chronogramme simplifié permettant d'expliciter un mode de réalisation particulier du procédé de transfert de communication selon l'invention ; et
- la figure 4 présente un schéma simplifié permettant d'expliciter le mécanisme de double transfert de communication selon l'invention.

Dans la suite de la description, on considère le cas d'un système de radio-communication de type GSM du type à accès multiple à répartition dans le temps (AMRT). Il est clair cependant que l'invention s'applique à tout type de système de radio-communication numérique cellulaire.

Il convient de noter cependant que l'invention peut s'appliquer à d'autres types de techniques de communication, notamment mais non exclusivement du type à Accès Multiple à Répartition en Fréquence (AMRF ou FDMA pour "Frequency Division Multiple Access" en anglais) et du type à Accès Multiple à Répartition par Code (AMRC CDMA pour "Code Division Multiple Access" en anglais).

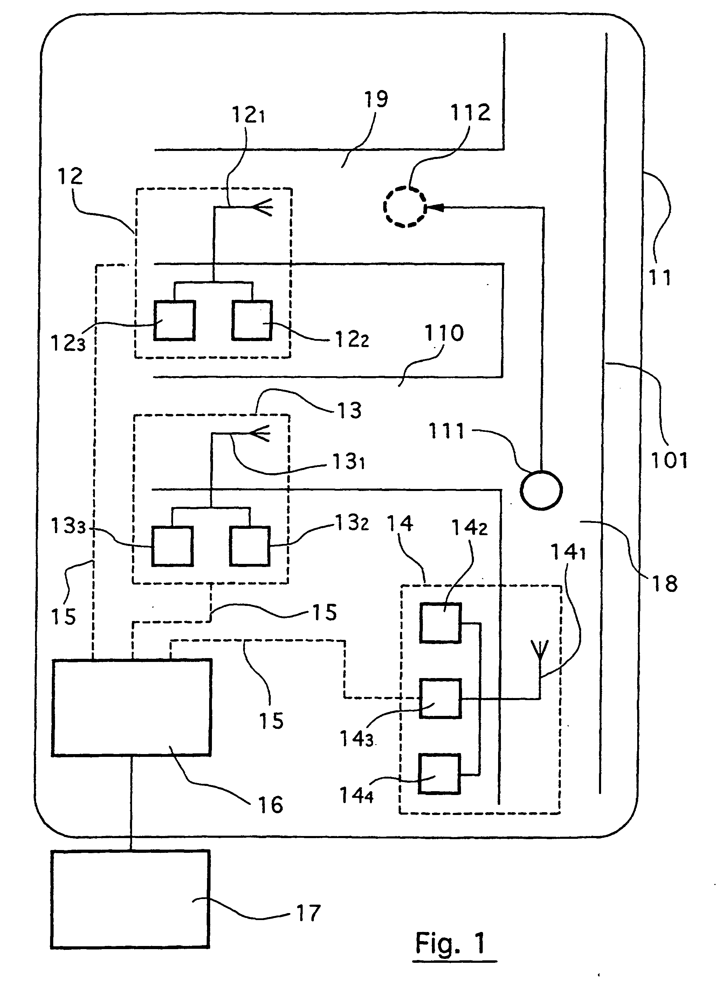

On rappelle tout d'abord, en relation avec la figure 1, un système de radio-communication GSM dans lequel il est possible de mettre en oeuvre le procédé selon l'invention de transfert de communication entre un relais courant et un relais cible.

A titre explicatif, on considère une cellule 11 couvrant un bâtiment 101 comprenant trois couloirs 18, 19 et 110. Cette cellule 11 est associée à une station de base distribuée comprenant un centre de concentration 16 et trois relais 12 à 14, placés chacun dans un des couloirs.

Classiquement, chacun des relais 12, 13, 14 comprend :
- une antenne 12₁, 13₁ et 14₁ ;
- éventuellement, un premier dispositif d'émission/réception 12₂, 13₂, 14₂ associé à la porteuse de signalisation BCCH de la cellule. Tous les relais de la cellule émettent la même porteuse de signalisation BCCH ;
- au moins un second dispositif d'émission/réception 12₃, 13₃, 14₃, 14₄ , chaque dispositif d'émission/réception étant associé à une porteuse de trafic distincte de voie montante ou descendante. Chaque relais 12, 13, 14 utilise donc une ou plusieurs porteuses de trafic, supportant une pluralité de canaux de trafic TCH, et une pluralité de canaux de signalisation associés aux canaux de trafic TCH.

Selon une variante, la porteuse de signalisation BCCH (qui, rappelons le, est unique pour la cellule) n'est émise que par certains relais, voire même par aucun si la station de base comprend des moyens, distincts des relais, dédiés à cette seule émission.

La station de base met par exemple en oeuvre une technique de saut de fréquence lent (c'est-à-dire de trame en trame), de façon que le facteur de réutilisation de fréquences soit égal à un. De ce fait, il ne reste que la seule fréquence (ou porteuse) portant la signalisation BCCH à planifier. La couverture et/ou la densité de communication sont donc considérablement améliorées.

Les relais 12, 13, 14 sont par exemple séparés d'une distance comprise entre 100 et 200 m. On peut donc négliger le temps de parcours d'un message entre la station mobile 111 et son relais courant 14. A titre explicatif, on suppose qu'une station mobile 111 se déplace et s'engage dans l'un des couloirs (par exemple 19) pour se retrouver dans la position référencée 112. Il convient donc dans cet exemple d'effectuer un transfert de communication entre le relais courant 14 et un relais cible 12.

Pour une communication établie, le système de radio-communication affecte à la station mobile 111, parmi les canaux du relais courant 14 puis parmi ceux du relais cible, au moins un canal de trafic courant ainsi qu'au moins un canal de signalisation associé courant.

Les relais 12, 13, 14 sont synchrones en trames et chacun des canaux de chacun des relais 12, 13, 14 est défini avec un jeu de caractéristiques particulier (loi de saut de fréquences, TSC, SFN,...).

Tous les relais 12, 13, 14 de la cellule 11 sont connectés, via l'interface Abis 15, au centre de concentration 16 de relais. Ce dernier intervient en tant qu'intermédiaire dans les communications entre les relais 12 à 14 et le contrôleur de station de base (ou BSC pour "Base Station Controler" en anglais) 17 qui contrôle plusieurs stations de base du système de radio-communication GSM. Selon une variante, les fonctions de concentration sont assurées directement par le BSC, et la station de base distribuée ne comprend pas de centre de concentration en tant qu'élément physique indépendant.

Selon une caractéristique essentielle de l'invention, les relais 12 à 14 de la cellule partagent au moins un canal de trafic, dit canal de trafic partagé, et éventuellement au moins un canal de signalisation associé au canal de trafic partagé, dit canal de signalisation associé partagé. Ces canaux partagés sont réservés au transfert de communication, comme expliqué en détail par la suite.

Le canal de trafic partagé, et éventuellement le canal de signalisation associé partagé, sont définis chacun avec des caractéristiques identiques dans l'ensemble des relais 12 à 14. Les caractéristiques identiques comprennent notamment la loi de saut de fréquences, le TSC, le SFN....

Le canal de signalisation associé partagé peut correspondre à au moins un canal de contrôle associé lent (SACCH pour "Slow Associated Control CHannel" en anglais) et/ou au moins un canal de contrôle associé rapide (FACCH pour "Fast Associated Control CHannel" en anglais).

La réservation au transfert de communication des canaux partagés peut être soit stricte soit partielle. Dans le premier cas, les canaux partagés ne sont affectés qu'au seul transfert de communication, tandis que dans le second cas, ils peuvent être affectés à d'autres fonctions (trafic et/ou signalisation notamment). Dans le premier cas, il est par ailleurs avantageux que le relais 14 comporte un ou plusieurs dispositif(s) d'émission/réception supplémentaire(s) 14₄, de façon à augmenter le nombre de canaux de trafic disponibles et donc diminuer le risque de blocage.

Il est à noter que même si la réservation du canal de trafic partagé concerne tous les relais, il est cependant possible d'activer uniquement certains de ces relais lors de la mise en oeuvre du mécanisme de double transfert de communication selon l'invention (expliqué en détail ci-dessous). Dans ce cas, la sélection du meilleur relais est effectuée parmi les seuls relais activés. Par exemple, seuls les relais les plus proches du relais courant sont activés (c'est-à-dire les relais susceptibles d'être cibles dans le transfert de communication sont impliqués).

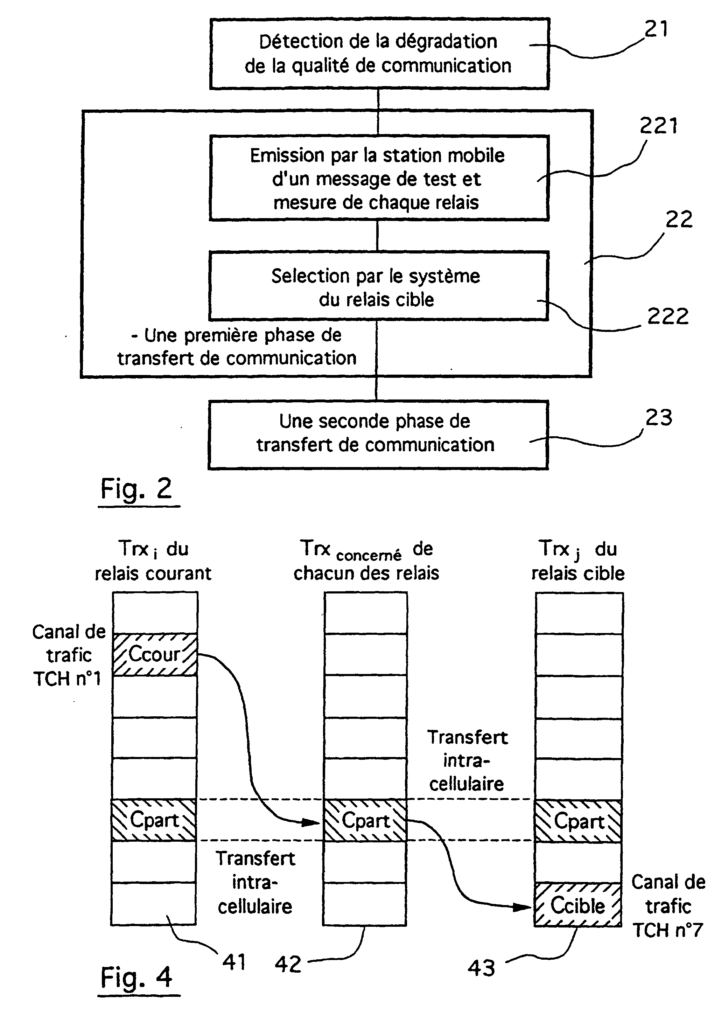

On présente maintenant, en relation avec l'organigramme de la figure 2, un premier mode de réalisation particulier du procédé selon l'invention de transfert de communication entre deux relais.

Comme indiqué précédemment, on suppose, à titre explicatif, que l'on cherche à effectuer un transfert de communication, pour la station mobile 111, entre le relais courant 14 et le relais cible 12.

Le procédé selon l'invention comprend les étapes successives suivantes :
- le système détecte (21), selon un critère de détection prédéterminé, une dégradation de la qualité de la communication. Selon une variante, cette dégradation est détectée par la station mobile. Selon une autre variante de réalisation, elle est détectée, par la station mobile et le système. Le critère de détection prédéterminé correspond par exemple à la comparaison de cette mesure de qualité de réception avec un seuil minimum requis et l'observation que cette mesure est inférieure à ce seuil minimum ;
- le système effectue une première phase 22 de transfert de communication, avec comme premier canal de trafic cible le canal de trafic partagé. Cette première phase 22 constitue le premier temps du mécanisme de double transfert de communication selon l'invention. En effet, le canal de trafic cible (final) n'est pas encore connu à ce stade du procédé. On notera que dans le cas d'une réservation partielle, le(s) canal(ux) partagé(s) réservé(s) au transfert de communication doi(ven)t être "réservé(s)" suite à la détection de la dégradation de la qualité de la communication. La première phase 22 de transfert de communication comprend les étapes successives suivantes :
   * la station mobile émet (221), via le canal de trafic partagé, un ou plusieurs message(s) de test en direction de la pluralité des relais et chaque relais effectue une mesure de la qualité de réception de ce(s) message(s) de test. II est à noter qu'en tant que message(s) de test, on peut prévoir au moins un message spécifique tel que celui d"'Handover-Access" et éventuellement un ou plusieurs message(s) de trafic ;
   * le système sélectionne (222) le relais cible parmi la pluralité de relais, en fonction d'au moins un critère de sélection prédéterminé basé sur au moins un paramètre lié à la qualité de réception du ou des message(s) de test. Le relais cible sélectionné est avantageusement celui qui permet par exemple une meilleure communication avec la station mobile concernée par le transfert de communication en cours. Il est à noter que, dans le pire des cas, il peut s'avérer que, malgré la détection de la dégradation de la qualité de communication, le relais courant demeure le moins mauvais des relais à recevoir les messages de la station mobile ;
- le système effectue (23) une seconde phase de transfert de communication, avec comme second canal de trafic cible un canal de trafic associé au relais cible.

Selon une variante de réalisation, la première phase 22 de transfert de communication peut être immédiatement suivie d'une étape de libération des canaux courants (canal de trafic courant et canal(ux) de signalisation associé(s) courant(s)) utilisés par le relais courant.

Selon une variante de réalisation, la seconde phase 25 de transfert de communication peut être immédiatement suivie d'une étape de libération des canaux partagés (canal de trafic partagé et canal(ux) de signalisation associé(s) partagé(s)) utilisés par le relais courant. Cela est notamment intéressant dans le cas où il est possible d'utiliser ces canaux partagés en tant que canaux "normaux" (de trafic et de signalisation associé(s)) par exemple dans le cadre d'une réservation partielle de ces canaux partagés.

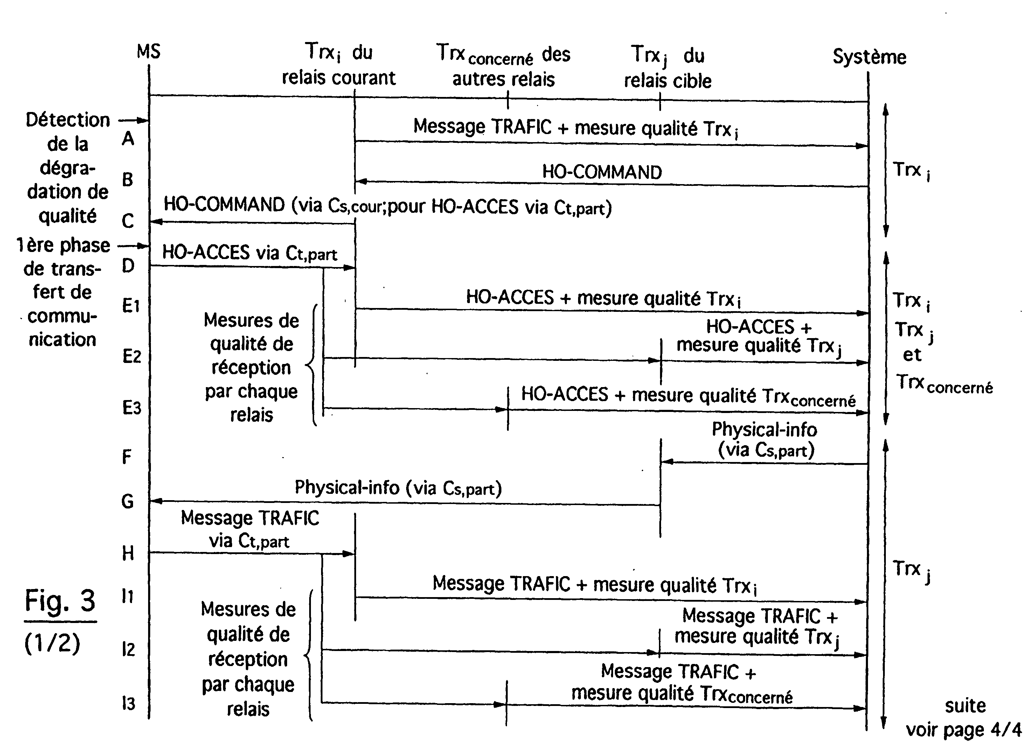

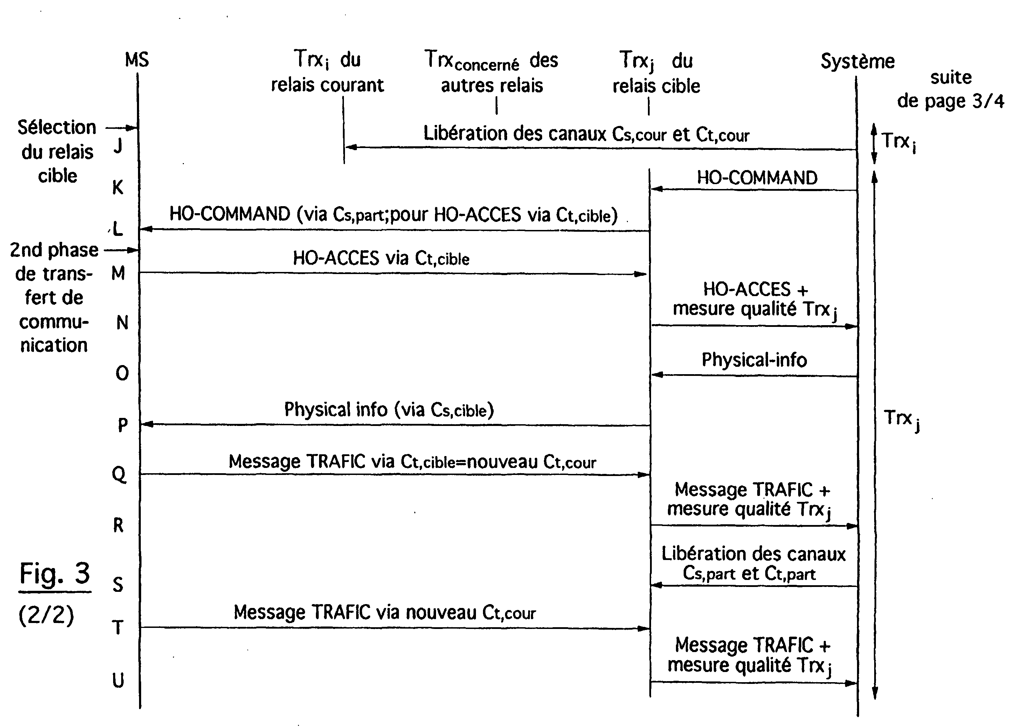

On présente maintenant, en relation avec le chronogramme de la figure 3, un mode de réalisation particulier du procédé selon l'invention de transfert de communication.

On va décrire dans ce qui suit un transfert de communication de type asynchrone.

Il est clair cependant que l'invention s'applique également au cas synchrone, l'homme du métier pouvant aisément passer d'un cas à l'autre, tout en restant dans le cadre de la présente invention.

Le fait que le transfert de communication soit de type asynchrone signifie notamment que l'information d'avance temporelle vis-à-vis d'une part des relais 13, 14 susceptibles d'être cibles, et d'autre part du relais cible 12, doit être fournie à la station mobile.

Par souci de simplification, on suppose, dans la suite de la description que le dispositif d'émission/réception (TRXᵢ du relais courant) mettant en oeuvre le canal de trafic courant et le canal de signalisation associé courant est également celui mettant en oeuvre le canal de trafic partagé et le canal de signalisation associé partagé. On suppose également que le dispositif d'émission/réception (TRXⱼ du relais cible) mettant en oeuvre le canal de trafic partagé et le canal de signalisation associé partagé est également celui mettant en oeuvre le canal de trafic cible et le canal de signalisation associé cible (cf fig.4).

Il est clair cependant que, pour supporter les canaux précités, des dispositifs d'émission/réception différents peuvent être utilisés, dans le relais courant comme dans le relais cible.

Les étapes, référencées A à U, sont décrites successivement ci-dessous.

A l'étape A, le dispositif d'émission/réception TRXᵢ du relais courant transmet au système, via l'interface Abis, une mesure de la qualité de réception d'un message de trafic sur le canal de trafic courant C_{t, cour}, par le dispositif d'émission/réception TRXᵢ. Cette mesure peut éventuellement être transmise avec le message de trafic (émis à l'origine par la station mobile MS) dont elle indique la qualité de réception.

Selon une variante de réalisation, la station mobile MS mesure la qualité de réception d'un message de trafic envoyé par le relais courant. Le résultat de cette mesure est alors transmis au système, à partir de la station mobile, et via le relais courant.

Suite à l'étape A, on suppose que le système détecte une dégradation de la qualité de réception du message envoyé par la station mobile MS. Cette opération de détection constitue l'étape 21 de la figure 2.

Les étapes B à G suivantes constituent la première phase 22 de transfert de communication de la figure 2 du mécanisme de double transfert de communication selon l'invention.

A l'étape B, le système transmet au relais courant, via l'interface Abis, un premier message de demande de transfert HO-COMMAND (pour "Handover-Command").

A l'étape C, le dispositif d'émission/réception TRXᵢ du relais courant envoie un premier message de demande de transfert "Handover-Command" à la station mobile, via au moins un canal de signalisation associé courant C_{s,cour}. Ce canal de signalisation est par exemple le canal FACCH. Ce message invite, au moyen de paramètres qui lui sont propres, la station mobile MS à envoyer au moins un premier message de test "Handover-Access", destiné à être mesuré par tous les relais, via le canal de trafic partagé C_{t,part}.

Il est à noter que jusqu'à l'étape C, la communication entre la station mobile MS et le relais courant s'établit via les canaux courants (canal de trafic courant C_{t,cour} et canal de signalisation associé courant C_{s,cour}) par l'intermédiaire du dispositif d'émission/réception TRXᵢ du relais courant.

Les étapes D à E₃ suivantes constituent l'étape 221 de la figure 2.

A l'étape D, la station mobile MS envoie un premier message de test "Handover Access" à la pluralité de relais, via le canal de trafic partagé C_{t,part}. Le canal de trafic partagé constitue le premier canal de trafic cible du mécanisme de double transfert de communication selon l'invention. Le message de test "Handover-Access" est alors écouté par tous les relais de la cellule. Ce premier message de test est éventuellement suivi d'au moins un second message de test.

Aux étapes E₁, E₂ et E₃, effectuées simultanément, chaque relais transmet, via l'interface Abis, une mesure de la qualité de réception du premier ou des message(s) de test (ou une information de qualité) sur le canal de trafic partagé C_{t,part}. Cette(chacune de ces) mesure(s) est éventuellement accompagnée du premier (ou du) message de test (associé) (c'est-à-dire sur lequel a été effectué la mesure).

A l'étape F, le système transmet un premier message de réponse "PHYSICAL-INFO", via l'interface Abis, au dispositif d'émission/réception TRXⱼ du relais cible. Ce message de réponse est destiné à indiquer notamment les informations (puissance, valeur de l'information d'avance temporelle "Timing Advance"...) nécessaires à la station mobile pour se synchroniser vis-à-vis du relais cible. Le canal de signalisation associé partagé C_{s,part} est par exemple un canal de contrôle associé lent SACCH (ou un canal de contrôle associé rapide FACCH).

A l'étape G, le premier message de réponse est transmis, à partir du dispositif d'émission/réception TRXⱼ du relais cible vers la station mobile. Pour ce faire, la transmission du premier message de réponse est effectuée via le canal de signalisation associé partagé C_{s,part}. Le premier message de réponse est accompagné des informations de synchronisation précitées, à savoir notamment l'information d'avance temporelle (TA).

A l'étape H, la station mobile continue sa communication en émettant au moins un message de trafic "MESSAGE DE TRAFIC", via le canal de trafic partagé C_{t,part}, vers le relais cible. Il est à noter qu'il est cependant intéressant de limiter le nombre de messages de trafic qui doivent transiter via le canal de trafic partagé C_{t,part}. En effet, d'autres stations mobiles doivent pouvoir également l'utiliser pour leur propre transfert de communication.

Il est important de noter que pour les étapes D à H, la communication entre la station mobile MS et le ou les relais impliqué(s) s'établit via les canaux partagés (canal de trafic partagé C_{t,part} et canal de signalisation associé partagé C_{s,part}) par l'intermédiaire du dispositif d'émission/réception TRX_{concerné} de chaque relais impliqué.

Aux étapes I₁, I₂, et I₃, effectuées simultanément, chaque relais cible transmet, via l'interface Abis, une mesure de la qualité de réception du message de trafic (ou une information de qualité) qu'il a effectuée sur le canal de trafic partagé C_{t,part}. Chacune de ces mesures peut éventuellement être accompagnée du message de trafic correspondant. Du fait que le canal de trafic partagé permet la communication du système avec la station mobile, le canal de trafic partagé peut être considéré comme un "véritable" canal de trafic vis-à-vis de la station mobile et/ou du système réservé à la communication.

Le système reçoit et analyse les différentes mesures provenant des différents relais (relais courant, relais cible à déterminer et autres relais). Puis, le système sélectionne le relais cible, en fonction d'un critère de sélection. Cette opération de sélection constitue l'étape 222 de la figure 2 qui n'apparaît pas en tant que telle dans la figure 3 décrite ici. Le critère de sélection est, par exemple, basé sur la meilleure valeur de la puissance de réception mesurée par l'ensemble des relais ayant effectué les mesures de qualité. Il est clair cependant que le critère de sélection peut être basé sur d'autres paramètres, liés eux aussi à la qualité de réception du ou des message(s) de test tels que notamment le rapport signal à bruit, le taux d'erreur brut, le taux d'erreur après décodage, etc.

Selon une variante de réalisation, la sélection peut être effectuée entre les étapes E₃ et F. Cependant, on comprendra qu'il est préférable d'effectuer également une ou des mesure(s) de qualité sur un ou des message(s) de trafic, en tant que message(s) de test, afin de pouvoir entreprendre une sélection plus fiable du relais cible.

A l'étape J, le système transmet au relais courant, via l'interface Abis, un premier message de libération "LIBÉRATION" des canaux courants (canal de trafic courant C_{t,cour} et canal de signalisation associé courant C_{s,cour}).

Selon une variante, ce premier message de libération des canaux courants est transmis immédiatement après l'étape C de transmission du premier message de transfert "HO-COMMAND".

Les étapes K à P suivantes constituent la seconde phase 23 de transfert de communication de la figure 2 du mécanisme de double transfert de communication selon l'invention.

A l'étape K, le système transmet au relais cible, via l'interface Abis, un second message de demande de transfert HO-COMMAND. On rappelle que, lors de l'étape B, un premier message de demande de transfert HO-COMMAND a été préalablement transmis par le système au relais courant pour initier la première phase de transfert de communication du mécanisme de double transfert selon l'invention.

A l'étape L, le relais cible transmet à la station mobile MS, via au moins un canal de signalisation associé partagé C_{s,part}, le second message de demande de transfert "HO-COMMAND". Ce message invite la station mobile MS à envoyer, via le canal de trafic cible C_{t,cible}, un second message de test "HO-ACCESS". Le canal de trafic cible constitue le second canal de trafic cible du mécanisme de double transfert de communication selon l'invention. Pour ce faire, la transmission du second message de demande de transfert entre le relais cible et la station mobile est effectuée sur le canal FACCH, en tant que canal de signalisation associé partagé C_{s,part}.

A l'étape M, la station mobile MS envoie un second message de test "HO-ACCESS", via le canal de trafic cible C_{t,cible}, au relais cible. On rappelle que, lors de l'étape D, la station mobile MS a préalablement envoyé un premier message de test "HO-ACCESS", via le canal de trafic courant C_{t,cour}, au relais courant.

A l'étape N, le relais cible transmet, via l'interface Abis, la mesure de la qualité de réception du second message de test (ou une information de qualité) qu'il a effectuée. Cette mesure est éventuellement accompagnée du second message de test correspondant (sur lequel a été effectué la mesure).

A l'étape O, le système transmet, via l'interface Abis, au relais cible, un second message de réponse "PHYSICAL-INFO". On rappelle que, lors de l'étape F, le système a préalablement transmis, via l'interface Abis, au relais cible, un premier message de réponse "PHYSICAL-INFO". Le second message de réponse est également destiné à indiquer notamment les informations (puissance, valeur de l'information d'avance temporelle "Timing Advance"...) nécessaires à la station mobile pour se synchroniser vis-à-vis du relais cible. Pour ce faire, le canal de signalisation associé cible C_{s,cible} est par exemple un canal SACCH (ou FACCH).

A l'étape P, le dispositif d'émission/réception TRXⱼ du relais cible transmet le second message de réponse à la station mobile, via le canal de signalisation associé cible C_{s,cible}, accompagné des informations de synchronisation, à savoir notamment l'information d'avance temporelle (TA).

A l'étape Q, la seconde phase de transfert de communication est terminée, la station mobile communique, via le canal de trafic cible C_{t,cible}, du relais cible. Elle continue donc sa communication en émettant des messages de trafic "MESSAGE DE TRAFIC" via le nouveau canal de trafic courant C_{t,courant} avec le nouveau relais courant. En effet, le canal de trafic cible et le relais cible sont respectivement devenus le nouveau canal de trafic courant et le nouveau relais courant.

A l'étape R, le nouveau relais courant retransmet au système, via l'interface Abis, une mesure de la qualité de réception du message de trafic. Cette mesure peut éventuellement être transmise avec le message de trafic auquel elle est associée.

Il est important de noter qu'à partir de l'étape Q, la communication entre la station mobile MS et le nouveau relais courant s'établit via les nouveaux canaux courants c'est-à-dire les canaux cibles (canal de trafic cible C_{t,cible} et canal de signalisation associé cible C_{s,cible}) par l'intermédiaire du dispositif d'émission/réception TRXⱼ du nouveau relais courant c'est-à-dire du relais cible.

A l'étape S, le système transmet, via l'interface Abis, au dispositif d'émission/réception courant TRXᵢ du relais courant un second message de libération "LIBERATION" des canaux partagés (canal de trafic partagé C_{t,part} et canal de signalisation associé partagé C_{s,part}). Le but est notamment de les laisser disponibles pour d'autres transferts de communication associés à d'autres stations mobiles dans le cadre d'une réservation stricte ou de les laisser libres pour une utilisation en tant que canaux normaux de trafic et de signalisation dans le cadre d'une réservation partielle.

Selon une variante de réalisation, ce second message de libération des canaux partagés est transmis immédiatement après l'étape L de transmission du premier message de transfert "HO-COMMAND".

Selon une autre variante de réalisation, simultanément à l'étape S, une libération des canaux courants (canal de trafic courant C_{t,cour} et de signalisation courant associé C_{s,cour}) peut être envisagée. Dans ce cas, le premier message de libération ne se produit plus lors de l'étape J mais lors de l'étape S.

Optionnellement, on peut prévoir une gestion des collisions des différents messages envoyés sur les canaux partagés (canal(ux) de trafic partagé(s) C_{t,part} et canal(ux) de signalisation associé(s) partagé(s) C_{s,part}).

A l'étape T, la station mobile continue sa communication en émettant au moins un message de trafic "MESSAGE DE TRAFIC" via le nouveau canal de trafic courant C_{t,courant} vers le nouveau relais courant.

A l'étape U, le nouveau relais courant transmet, via l'interface Abis, la mesure de la qualité de réception du message de trafic précédent (effectuée par le nouveau relais courant). De même que pour l'étape A, cette mesure est éventuellement accompagnée du message de trafic correspondant.

La communication entre le système et la station mobile peut faire, par la suite, de nouveau l'objet d'au moins un autre mécanisme de double transfert selon l'invention.

Il est clair que, si le relais courant est le "moins mauvais" des relais de la cellule en ce qui concerne la mesure de la qualité de réception, le relais cible et le relais courant sont alors confondus. Dans ce cas, le dispositif d'émission/réception cible peut cependant être soit identique (donc pas de transfert de communication) soit différent (transfert de communication) du dispositif d'émission/réception courant.

On présente à nouveau, en relation avec le schéma de la figure 4, le mécanisme de double transfert de communication selon l'invention.

Selon le contexte de l'invention (station de base distribuée avec des relais répartis géographiquement), à chaque dispositif d'émission/réception TRXᵢ (pour le relais courant), TRX_{concerné} (pour chacun des autres relais) et TRXⱼ (pour le relais cible) est associée une porteuse distincte 41, 42, 43 respectivement. Chaque porteuse est structurée en trames elles-même divisées en un nombre déterminé d'intervalle de temps (classiquement 8). Chaque canal de trafic TCH n°1 à TCH n°7 d'une porteuse donnée est véhiculé par un intervalle de temps distinct.

On considère à titre d'exemple que la station mobile communique initialement avec le dispositif d'émission/réception TRXᵢ du relais courant, via le canal de trafic TCH n°1 courant et le(s) canal(ux) de signalisation associé(s) courant(s).

Puis, on suppose que, suite à une détection de la dégradation de la qualité de réception par le relais courant d'un message de trafic issu de la station mobile, le transfert de communication vers un relais cible à déterminer est déclenché.

Le procédé selon l'invention de transfert de communication entre relais consiste donc notamment à effectuer successivement :
- un premier transfert de communication à partir du canal de trafic courant (C_{t,cour}) vers le canal de trafic partagé (C_{t,part}) en tant que premier canal de trafic cible. En d'autres termes, on passe du dispositif d'émission/réception courant du relais courant au dispositif d'émission/réception concerné (c'est-à-dire portant le(s) canal(ux) partagé(s)) de chacun des relais ;
- un second transfert de communication à partir du canal de trafic partagé (C_{t,part}) vers le canal de trafic cible (C_{t,cible}) en tant que second canal de trafic cible.. En d'autres termes, on passe du dispositif d'émission/réception concerné de chacun des relais au dispositif d'émission/réception cible du relais cible.

## Revendications

1. Procédé de transfert d'une communication entre deux relais (12, 13, 14), dits relais courant (14) et relais cible (12, 13), au sein d'une même cellule (11) d'un système de radiocommunication numérique cellulaire, ladite cellule (11) étant associée à une station de base comprenant une pluralité de relais (12, 13, 14), dont lesdits relais courant (14) et cible (12, 13, 14), distribués géographiquement au sein de ladite cellule (11), chaque relais (12, 13, 14) comprenant au moins une antenne (12₁, 13₁, 14₁) reliée à au moins un dispositif d'émission/réception (12₂, 12₃, 13₂, 13₃, 14₂, 14_{3,} 14₄), chaque relais (12, 13, 14) disposant d'une pluralité de canaux de trafic et d'une pluralité de canaux de signalisation associés, ladite communication étant établie pour une station mobile (111) et se voyant affecter, parmi les canaux du relais courant (14), au moins un canal de trafic courant et au moins un canal de signalisation associé courant,
**caractérisé en ce que** ladite pluralité de relais (12, 13, 14) partage au moins un canal de trafic particulier, dit canal de trafic partagé (C_{t,part}), qui est réservé au moins partiellement au transfert de communication,
et **en ce que** ledit procédé comprend les étapes successives suivantes :
- une première phase (22) de transfert de communication, avec comme premier canal de trafic cible ledit canal de trafic partagé ;
ladite première phase (22) comprenant elle-même les étapes successives suivantes :
* l'émission (221) par ladite station mobile (111) d'au moins un message de test (HO-ACCESS) vers ladite pluralité de relais (12, 13, 14), via ledit canal de trafic partagé (C_{t,part}) ;
* la sélection (222) par ledit système dudit relais cible (12, 13, 14) parmi ladite pluralité de relais (12, 13, 14), en fonction d'au moins un critère de sélection prédéterminé basé sur au moins un paramètre lié à la qualité de réception dudit au moins un message de test ;
- une seconde phase (23) de transfert de communication, avec comme second canal de trafic cible un canal de trafic associé audit relais cible.

2. Procédé selon la revendication 1, **caractérisé en ce que** ladite première phase de transfert de communication est précédée de l'étape suivante :
- ledit système et/ou ladite station mobile (111) détecte(nt) (21), selon un critère de détection prédéterminé, une dégradation de la qualité de ladite communication.

3. Procédé selon l'une quelconque des revendications 1 et 2, **caractérisé en ce que** ledit système de radiocommunication numérique cellulaire est du type à accès multiple à répartition dans le temps.

4. Procédé selon la revendication 3, **caractérisé en ce que** tous les relais (12, 13, 14) de ladite cellule (11) sont synchrones en trames,
et **en ce que** ledit canal de trafic partagé (C_{t,part}) est défini avec des caractéristiques identiques dans l'ensemble desdits relais (12, 13, 14).

5. Procédé selon l'une quelconque des revendications 1 à 4, **caractérisé en ce que** la réservation au transfert de communication dudit canal de trafic partagé (C_{t,part}) est du type appartenant au groupe comprenant :
- la réservation stricte ;
- la réservation partielle, par mise en oeuvre d'une stratégie prédéterminée de gestion de priorité.

6. Procédé selon l'une quelconque des revendications 1 à 5, **caractérisé en ce que** ledit transfert de communication est du type asynchrone ou synchrone.

7. Procédé selon l'une quelconque des revendications 1 à 6, **caractérisé en ce que** ladite première phase de transfert de communication est suivie de l'étape suivante :
- ledit système envoie (J) audit relais courant (14) un message de libération dudit au moins un canal de trafic courant.

8. Procédé selon l'une quelconque des revendications 1 à 7, **caractérisé en ce que** ladite seconde phase de transfert de communication est suivie de l'étape suivante :
- ledit système envoie (S) à ladite pluralité de relais (12 à 14) un message de libération dudit au moins un canal de trafic partagé.

9. Procédé selon l'une quelconque des revendications 1 à 8, **caractérisé en ce que** ledit au moins un paramètre, lié à la qualité de réception dudit au moins un message de test et sur lequel est basé ledit critère de sélection prédéterminé, appartient au groupe comprenant :
- la puissance de réception ;
- le rapport signal à bruit ;
- le taux d'erreur brut ;
- le taux d'erreur après décodage.

10. Procédé selon l'une quelconque des revendications 1 à 9, **caractérisé en ce que** ladite cellule (11) correspond à une couverture en intérieur et/ou en extérieur.

11. Station mobile pour la mise en oeuvre d'un procédé suivant l'une des revendications 1 à 10, **caractérisée en ce qu'**elle comporte :
- des moyens pour mettre en oeuvre ladite première phase de transfert de communication, avec comme premier canal de trafic cible ledit canal de trafic partagé,
comportant eux-mêmes des moyens pour émettre au moins un message de test (HO-ACCESS) vers ladite pluralité de relais (12, 13, 14), via ledit canal de trafic partagé (C_{t,part}) ;
- des moyens pour mettre en oeuvre ladite deuxième phase de transfert de communication, avec comme second canal de trafic cible un canal de trafic associé audit relais cible.

12. Station mobile selon la revendication 11, pour la mise en oeuvre d'un procédé selon l'une des revendications 2 à 10, **caractérisée en ce qu'**elle comporte des moyens pour, dans une étape précédant ladite première phase de transfert de communication, détecter, selon un critère de détection prédéterminé, une dégradation de la qualité de ladite communication.

13. Système pour la mise en oeuvre d'un procédé suivant l'une des revendications 1 à 10, **caractérisé en ce qu'**il comporte :
- des moyens pour mettre en oeuvre ladite première phase de transfert de communication, avec comme premier canal de trafic cible ledit canal de trafic partagé,
comportant eux-mêmes des moyens pour sélectionner ledit relais cible (12, 13, 14) parmi ladite pluralité de relais (12, 13, 14), en fonction d'au moins un critère de sélection prédéterminé basé sur au moins un paramètre lié à la qualité de réception dudit au moins un message de test ;
- des moyens pour mettre en oeuvre ladite deuxième phase de transfert de communication, avec comme second canal de trafic cible un canal de trafic associé audit relais cible.

14. Système selon la revendication 13, pour la mise en oeuvre d'un procédé selon l'une des revendications 7 à 10, **caractérisé en ce qu'**il comporte :
- des moyens pour, dans une étape suivant ladite première phase de transfert de communication, envoyer audit relais courant (14) un message de libération dudit au moins un canal de trafic courant.

15. Système selon la revendication 13, pour la mise en oeuvre d'un procédé selon l'une des revendications 8 à 10, **caractérisé en ce qu'**il comporte :
- des moyens pour, dans une étape suivant ladite deuxième phase de transfert de communication, envoyer à ladite pluralité de relais (12 à 14) un message de libération dudit au moins un canal de trafic partagé.

## Patentansprüche

1. Verfahren zur Weitergabe eines Gesprächs zwischen zwei Relaisstationen (12, 13, 14), die als aktuelle Relaisstation (14) und als Ziel-Relaisstation (12, 13) bezeichnet werden, innerhalb ein und derselben Zelle (11) eines digitalen und zellularen Funksystems, wobei die genannte Zelle (11) einer Basisstation mit einer Vielzahl von Relaisstationen (12, 13, 14), darunter die aktuelle Relaisstation (14) und die Ziel-Relaisstation (12, 13, 14), zugeordnet ist, diese Relaisstationen geographisch innerhalb der genannten Zelle (11) verteilt sind, jede Relaisstation (12, 13, 14) über mindestens eine mit mindestens einer Sende-/Empfangsvorrichtung (12₂, 12₃, 13₂, 13₃, 14₂, 14₃, 14₄) verbundene Antenne (12₁, 13₁, 14₁) verfügt, jede Relaisstation (12, 13, 14) eine Vielzahl von Verkehrskanälen und eine Vielzahl zugeordneter Signalisierungskanäle umfasst, und der genannten Gesprächsverbindung beim Aufbau für eine Mobilstation (111) unter den Kanälen der aktuellen Relaisstation (14) mindestens ein aktueller Verkehrskanal und mindestens ein zugeordneter, aktueller Signalisierungskanal zugewiesen werden,
**dadurch gekennzeichnet, dass** die genannte Vielzahl von Relaisstationen (12, 13, 14) mindestens einen spezifischen Verkehrskanal miteinander teilt, der als geteilter Verkehrskanal (C_{t,part}) bezeichnet wird und der zumindest teilweise der Weitergabe des Gesprächs vorbehalten ist,
und dass das genannte Verfahren die nachfolgend beschriebenen, aufeinander folgenden Etappen umfasst:
- eine erste Phase (22) der Weitergabe des Gesprächs mit dem so genannten geteilten Verkehrskanal als erstem Ziel-Verkehrskanal;
wobei die genannte erste Phase (22) ihrerseits die nachfolgend beschriebenen, aufeinander folgenden Etappen umfasst:
• das Aussenden (221) mindestens einer Testnachricht (HO-ACCESS) durch die genannte Mobilstation (111) über den genannten, geteilten Verkehrskanal (C_{t,part}) an die genannte Vielzahl von Relaisstationen (12, 13, 14);
• die Auswahl (222) der genannten Ziel-Relaisstation (12, 13, 14) unter der genannten Vielzahl von Relaisstationen (12, 13, 14) durch das genannte System in Abhängigkeit von mindestens einem vorbestimmten Auswahlkriterium, das auf mindestens einem mit der Empfangsqualität der genannten mindestens einen Testnachricht zusammenhängenden Parameter beruht;
- eine zweite Phase (23) der Weitergabe des Gesprächs mit einem der genannten Ziel-Relaisstation zugeordneten Verkehrskanal als zweitem Ziel-Verkehrskanal.

2. Verfahren gemäß Anspruch 1, **dadurch gekennzeichnet, dass** der genannten ersten Phase der Weitergabe des Gesprächs die folgende Etappe vorausgeht:
- das genannte System und/oder die genannte Mobilstation (111) erkennt (erkennen) (21) gemäß einem vorbestimmten Erkennungskriterium eine Verschlechterung der Qualität der genannten Gesprächsverbindung.

3. Verfahren gemäß einem der Ansprüche 1 und 2, **dadurch gekennzeichnet, dass** das genannte, digitale und zellulare Funksystem über einen Zeitmultiplexzugriff verfügt.

4. Verfahren gemäß Anspruch 3, **dadurch gekennzeichnet, dass** sämtliche Relaisstationen (12, 13, 14) der genannten Zelle (11) in Rahmen synchron sind, und dass der genannte geteilte Verkehrskanal (C_{t,part}) in sämtlichen der genannten Relaisstationen (12, 13, 14) mit identischen Charakteristiken definiert ist.

5. Verfahren gemäß einem der Ansprüche 1 bis 4, **dadurch gekennzeichnet, dass** die Belegung des genannten geteilten Verkehrskanals (C_{t,part}) für die Weitergabe eines Gesprächs einer der folgenden Gruppen angehört:
- der strikten Belegung;
- der Teilbelegung aufgrund der Anwendung einer vorbestimmten Strategie einer Rangfolgesteuerung.

6. Verfahren gemäß einem der Ansprüche 1 bis 5, **dadurch gekennzeichnet, dass** die genannte Weitergabe des Gesprächs asynchron oder synchron erfolgt.

7. Verfahren gemäß einem der Ansprüche 1 bis 6, **dadurch gekennzeichnet, dass** sich an die genannte erste Phase der Weitergabe des Gesprächs die folgende Etappe anschließt:
- das genannte System schickt (J) an die genannte aktuelle Relaisstation (14) eine Nachricht über die Freigabe des genannten, mindestens einen aktuellen Verkehrskanals.

8. Verfahren gemäß einem der Ansprüche 1 bis 7, **dadurch gekennzeichnet, dass** sich an die genannte zweite Phase der Weitergabe des Gesprächs die folgende Etappe anschließt:
- das genannte System schickt (S) an die genannte Vielzahl von Relaisstation (12 bis 14) eine Nachricht über die Freigabe des genannten, mindestens einen geteilten Verkehrskanals.

9. Verfahren gemäß einem der Ansprüche 1 bis 8, **dadurch gekennzeichnet, dass** der genannte, mindestens eine Parameter, der mit der Empfangsqualität der genannten, mindestens einen Testnachricht zusammenhängt und auf dem das genannte, vorbestimmte Auswahlkriterium beruht, der Gruppe angehört mit:
- der Empfangsleistung;
- dem Signal-Rausch-Verhältnis;
- der Bruttofehlerrate;
- der Fehlerrate nach der Decodierung.

10. Verfahren gemäß einem der Ansprüche 1 bis 9, **dadurch gekennzeichnet, dass** die genannte Zelle (11) einer Abdeckung drinnen und/oder draußen entspricht.

11. Mobilstation für die Anwendung eines Verfahrens gemäß einem der Ansprüche 1 bis 10, **dadurch gekennzeichnet, dass** sie Folgendes umfasst:
- Mittel zur Anwendung der genannten ersten Phase der Gesprächsweitergabe mit dem genannten geteilten Verkehrskanal als erstem Ziel-Verkehrskanal,
die ihrerseits über Mittel verfügen, um über den genannten geteilten Verkehrskanal (C_{t,part}) mindestens eine Testnachricht (HO-ACCESS) an die genannte Vielzahl von Relaisstationen (12, 13, 14) zu senden;
- Mittel zur Anwendung der genannten zweiten Phase der Gesprächsweitergabe mit einem der genannten Ziel-Relaisstation zugeordneten Verkehrskanal als zweitem Ziel-Verkehrskanal.

12. Mobilstation gemäß Anspruch 11 für die Anwendung eines Verfahrens gemäß einem der Ansprüche 2 bis 10, **dadurch gekennzeichnet, dass** sie Mittel umfasst, um in einer der genannten ersten Phase der Gesprächsweitergabe vorausgehenden Etappe gemäß einem vorbestimmten Erkennungskriterium eine Verschlechterung der Qualität der genannten Gesprächsverbindung zu erkennen.

13. System für die Anwendung eines Verfahrens gemäß einem der Ansprüche 1 bis 10, **dadurch gekennzeichnet, dass** es Folgendes umfasst:
- Mittel zur Ausführung der genannten ersten Phase der Gesprächsweitergabe mit dem genannten geteilten Verkehrskanal als erstem Ziel-Verkehrskanal,
die ihrerseits über Mittel zur Auswahl der genannten Ziel-Relaisstation (12, 13, 14) unter der genannten Vielzahl von Relaisstationen (12, 13, 14) in Abhängigkeit von mindestens einem vorbestimmten Auswahlkriterium verfügen, das auf mindestens einem mit der Empfangsqualität der genannten mindestens einen Testnachricht zusammenhängenden Parameter beruht;
- Mittel zur Ausführung der genannten zweiten Phase der Gesprächsweitergabe mit einem der genannten Ziel-Relaisstation zugeordneten Verkehrskanal als zweitem Ziel-Verkehrskanal.

14. System gemäß Anspruch 13 für die Anwendung eines Verfahrens gemäß einem der Ansprüche 7 bis 10, **dadurch gekennzeichnet, dass** es Folgendes umfasst:
- Mittel, um in einer auf die genannte erste Phase der Gesprächsweitergabe folgenden Etappe an die genannte aktuelle Relaisstation (14) eine Nachricht über die Freigabe des genannten, mindestens einen aktuellen Verkehrskanals zu schicken.

15. System gemäß Anspruch 13 für die Anwendung eines Verfahrens gemäß einem der Ansprüche 8 bis 10, **dadurch gekennzeichnet, dass** es Folgendes umfasst:
- Mittel, um in einer auf die genannte zweite Phase der Gesprächsweitergabe folgenden Etappe an die genannte Vielzahl von Relaisstationen (12 bis 14) eine Nachricht über die Freigabe des genannten, mindestens einen geteilten Verkehrskanals zu schicken.

## Claims

1. A method of handing over a call between two relay stations (12, 13, 14), respectively a current relay station (14) and a target relay station (12, 13), in the same cell (11) of a digital cellular mobile radio system, said cell (11) being associated with a base transceiver station comprising a plurality of relay stations (12, 13, 14), including said current (14) and target (12, 13, 14) relay stations, geographically distributed within said cell (11), each relay station (12, 13, 14) comprising at least one antenna (12₁, 13₁, 14₁) connected to at least one transmit/receive device (12₂, 12₃, 13₂, 13₃, 14₂, 14₃, 14₄), each relay station (12, 13, 14) having a plurality of traffic channels and a plurality of associated signalling channels, said call being set up for a mobile station (111) and being allocated, from the channels of the current relay station (14), at least one current traffic channel and at least one current associated signalling channel,
**characterized in that** said plurality of relay stations (12, 13, 14) shares at least one particular traffic channel, namely a shared traffic channel (C_{t,shar}), which is reserved at least partly for call handover,
and **in that** said method includes the following successive steps:
- a first call handover phase (22) in which said shared traffic channel is a first target traffic channel;
said first phase (22) itself including the following successive steps:
* sending (221) by said mobile station (111) of at least one test message (HO-ACCESS) to said plurality of relay stations (12, 13, 14) via said shared traffic channel (C_{t,shar});
* selection (222) by said system of said target relay station (12, 13, 14) from said plurality of relay stations (12, 13, 14), in accordance with at least one predetermined selection criterion based on at least one parameter associated with the quality of reception of said at least one test message;
- a second call handover phase (23) with a traffic channel associated with said target relay station as a second target traffic channel.

2. A method according to claim 1 **characterized in that** said first call handover phase is preceded by the following step:
- said system and/or said mobile station (111) detect(s) (21) deterioration in the quality of said call according to a predetermined detection criterion.

3. A method according to either claim 1 or claim 2 **characterized in that** said digital cellular mobile radio system is of the time-division multiple access type.

4. A method according to claim 3 **characterized in that** all the relay stations (12, 13, 14) of said cell (11) are synchronous at frame level and **in that** said shared traffic channel (C_{t,shar}) is defined with identical features in all said relay stations (12, 13, 14).

5. A method according to any of claims 1 to 4 **characterized in that** reservation of said shared traffic channel (C_{t,shar}) for call handover is of the type belonging to the group comprising:
- strict reservation;
- partial reservation, using a predetermined priority management strategy.

6. A method according to any of claims 1 to 5 **characterized in that** said call handover is asynchronous or synchronous.

7. A method according to any of claims 1 to 6 **characterized in that** said first call handover phase is followed by the following step:
- said system sends (J) said current relay station (14) a message telling it to release said at least one current traffic channel.

8. A method according to any of claims 1 to 7 **characterized in that** said second call handover phase is followed by the following step:
- said system sends (S) said plurality of relay stations (12 to 14) a message telling them to release said at least one shared traffic channel.

9. A method according to any of claims 1 to 8 **characterized in that** said at least one parameter associated with the quality of reception of said at least one test message and on which said predetermined selection criterion is based belongs to the group comprising:
- the receive power;
- the signal to noise ratio;
- the raw bit error rate;
- the bit error rate after decoding.

10. A method according to any of claims 1 to 9 **characterized in that** said cell (11) corresponds to an indoor and/or outdoor coverage.

11. A mobile station for implementing a method according to any of claims 1 to 10, **characterized in that** it comprises:
- means for implementing said first call handover phase using said shared traffic channel as the first target traffic channel,
said means themselves comprising means for sending at least one test message (HO-ACCESS) to said plurality of relay stations (12, 13, 14), via said shared traffic channel (C_{t,shar});
- means for implementing said second call handover phase using a traffic channel associated with said target relay station as second target traffic channel.

12. A mobile station according to claim 11, for implementing a method according to any of claims 2 to 10, **characterized in that** it comprises means for detecting degraded call quality in a step preceding said first call handover phase and in accordance with a predetermined detection criterion.

13. A system for implementing a method according to any of claims 1 to 10, **characterized in that** it comprises:
- means for implementing said first call handover phase using said shared traffic channel as first target traffic channel,
said means themselves comprising means for selecting said target relay station (12, 13, 14) from said plurality of relay stations (12, 13, 14) as a function of at least one predetermined selection criterion based on at least one parameter linked to the quality of reception of said at least one test message;
- means for implementing said second call handover phase using a traffic channel associated with said target relay station as second target traffic channel.

14. A system according to claim 13, for implementing a method according to any of claims 7 to 10, **characterized in that** it comprises:
- means for sending a message concerning releasing of said at least one current traffic channel to said current relay station (14) during a step following said first call handover phase.

15. A system according to claim 13, for implementing a method according to any of claims 8 to 10, **characterized in that** it comprises:
- means for sending a message concerning releasing of said at least one shared traffic channel to said plurality of relay stations (12 to 14) during a step following said second call handover phase.
